# EUROPEAN PATENT APPLICATION

(11) **EP 3 573 011 A1**
(43) Date of publication of application: **27.11.2019**
(21) Application number: 18745351.9
(22) Date of filing: 24.01.2018
(51) Int. Cl.: G06Q 50/00

(54) **METHOD FOR LOCATION AND INTERACTION BETWEEN COMPATIBLE PERSONS**

(30) Priority: 30.01.2017 ES 201730101
(71) Applicant: Crossroadwwide, SL, 03003 Alicante (ES)
(72) Inventor: PUEO ORTEGA, Basilio, 03003 Alicante (ES); DE CASTRO GARCÍA, Ernesto, 03003 Alicante (ES)
(74) Representative: Espiell Gomez, Ignacio
(86) International application number: PCT/ES2018/070053
(87) International publication number: WO 2018/138398

(57) **Abstract**

The invention relates to a method for location and interaction between compatible persons, as a function of certain aspects of user affinity, by means of a pairing system, with at least one transceiver element and a signalling element connected thereto, which method comprises the steps of: entering (1) the affinity aspects of a first user into the computer application (18) of a first transceiver element, the system comprising one transceiver element for each user; creating (2) a database (12) by means of the software layer of the first mobile device; searching (3) for compatible persons by emitting short-range signals from the first connection means (8) of the devices; linking (4) the devices through pairing, linking (6) the devices to the signalling elements by means of the second short-range connection means; and activating (7) the warning signal of the at least one sensor.

## Description

### Technical field of the invention

This invention corresponds to the technical field of the methods for location and interaction between compatible persons, where the said compatibility is determined depending on given features of affinity of the user, the said features of affinity being physical, psychic, of tastes, hobbies and/or any other characteristic it is wished, even the pursuit of the soulmate, in the physical and/or psychic aspect, by means of a pairing system that comprises at least a transmitting/receiving element and a signaling element connected to it.

### Background of the invention

Currently, thanks to the internet and social networks development, the persons are more connected than ever, which is envisaged in principle as an improvement to the need of socializing that the human being had throughout the times and that in the current society is threatened by the pace of work life of most of the persons.

In spite of this interconnection, it is however possible that a person feels lonely because of not having met that other like-minded person according to given features.

In the networks, a person can be connected with tenths, hundreds, thousands of persons, but this does not assure that there exists a special link between them beyond friendship, family, work..., many other persons have thousands of followers in their social accounts, who follow his/her comments, videos, but that he/she does not know and who, surely, have dissimilar tastes, preferences ... and, very probably, different from his/hers.

In addition, currently, the networks become a stage in which to show what we would like to be, while in the reality, the actual feelings of those persons, remain in a background. Thus, to the already difficult pursuit of like-minded persons through the internet, is added the lack of reality existing between what the users show and what they actually are or feel, therefore it is possible that a person can find another having certain tastes similar to his/hers, but hardly find persons who are virtually same to him/her, either physically and/or by personality traits.

To this it has to be added that the search options currently existing in the technique are focused in systems having a central software and a database that control the search and where the users introduce all those features, they are willing to point out.

Thus, it always depends on a central software that controls the information and on comparing between users and, there does not exist in the state-of-the-art any search system or process in which the mutual detection is possible between persons that are coinciding in a same time and space, without depending of a prior connection to a central software, which slows down the process and in addition makes it depends on a necessary internet coverage. There exists no system that presents any type of search device capable to contain all the information necessary for comparing, as well as to be activated when it detects, within a given operating range the existence of another device pertaining to a person having compatible features and that in addition activates a warning signal in order that the user becomes aware of the connection. And all of this without connecting to the Internet which would allow a connectivity between persons who are coinciding in a same space and time, fast and with effectiveness.

Currently any search device the user bears is incapable of detecting the existence of another dispositive nearby and, any intent that was carried out requires accessory receiving mechanisms that are the ones that detect the presence of an user locating device and communicate it to the software in order that this later starts the comparing process. This results slow and little effective, in addition to be expensive, because it is limited to areas in which the said receivers are installed and, of course, areas having connectivity to the network.

With the current systems it is necessary to have available a connection to the network to be able to carry out the search of the like-minded person, because without the said connection it is not possible to have access to the database or the software that carries out the comparison of the said data of the users, therefore, it depends on the existence of the said connection to be able to carry out the location of persons.

In addition, other limitations exist in the said systems, such as the fact that after filling the fields of the database, a search is carried out in a more or less immediate manner that offers as result the option with the higher level of coincidence, within the possibilities existing at that moment in the database, as well whether the like-minded person that is found is on the other side of the street as if he/she is thousands of kilometers away.

However, the matter of the distance is very important because, in order that an user seeking his/her like-minded person depending on given tastes or hobbies, for example that he/she is adventurous and likes climbing in addition to other factors, the fact to find a person with the same hobbies but who is living halfway around the world, easily means an hindrance and the user will not go all the way long to be able to acquaint somebody although he/she shares his/her same hobbies.

However, currently, if a user wishes to condition that the like-minded person is near to where he/she is located, as the study of coincidence is carried out on a central database, the solution consists in limiting the search areas to those that remain within a given operating range, therefore by limiting the search to users who live within the operating range, any option of link is discarded with other persons who, although they live out of the operating range, could at any moment be coincident with the user, for example in a travel to the same place and within a same space of time.

Therefore, in spite of seen the significance of the existence of systems that allow the location of users compatible coinciding with the user in the same space/time, the current systems are not capable of this option as they depend on central software and database.

The current system that will assess the search of compatible persons coinciding in a same space/time, randomly , by free will , would require that the user presents a device with which he/she is kept permanently connected to a central software that will permanently assess the possible coincidences with each user that he finds, but this result unworkable and little practical. This means, in addition, a significant cost of data consumption for the user and a consumption of the batteries or the means of power supply the devices possess that would be used for the said search and warning, therefore it would not be practical at all.

In order that the detection in a same space/time were possible in a practical, effective and workable manner, a local connection between devices should be carried out , that means that they are the users themselves that are coinciding, who bear some element adapted to establish a mutual detection between them and independently from the network and that, in addition, these elements can count with the information necessary for the study of the compatibility between users.

Another very important feature of the search systems existing nowadays depending on central software and database, is the lack of discretion, because when a user introduces his/her data and the features he/she is willing to point out to carry out the search, such data become public in the network, at least for the users of the system, in order that any of them can see them and assess whether they think them fit, if they are in line with his/her tastes and whether he/she decides or not to contact that person.

This means a first drawback having its origin in the fact that there are persons who, because of shyness, his/her social standing, his/her work post... are not willing that given data of their intimacy, tastes, habits, hobbies. become public but at the same time these data are important features for them in the search of coincidences in their like-minded person.

And, a second drawback due to the fact that as all the data of a user are known by the rest of the users of the system, if within a given time no warning of coincidence with a user is activated , problems of rejection or low self-esteem can arise as it could be understood that the rest of the users, aware of his/her data, coincident or not, had assessed other features, as for example the physical characteristics, to decide not to connect him/her.

Therefore and in this sense, it would be a great improvement to achieve developing a system or method for the search of like-minded persons in which each user ignores any information of the rest of the users and that the system would have the elements necessary to be able to detect the existence of user compatible with another , without connecting to a global network, in a fortuitously way and that, in addition, at the moment when they coincide in the same space and time, an element exists that automatically show them a warning signal.

This way, the users would rest assured knowing that at any moment they meet by chance a like-minded person, the system would detect it and would warn. It could even be advantageous that the system shows a warning signal that would only warn the user without showing his/her identity to the person compatible with him/her, in order that he/she may decide whether it results to be the right moment to make the link and decide whether contacting the user compatible with him without this later is aware of it.

There does not exist in the state-of-the-art a system that comprises the elements necessary to act at the users presence level without internet connection , thanks to elements that are capable to detect each other and activate a warning signal in the event that a compatibility between them is checked, by means of some signaling element that is located very close to the person, for example in an article of clothing, but without hindrances of necessarily recharging energy from time to time of use that would generate little capacity of movement and would result little practical.

As example of the state-of-the-art, the following documents of reference ES1074734, ES2208031, ES2305801 and ES2366881 can be mentioned.

The document of reference ES1074734 defines a clothing having sensorial and/or mechanical effects that comprises at least an article of clothing, at least a generating effect device and at least an activating device, attached to the said article of clothing. The activating device is capable of activating the effect generating device in order that this later produces a sensorial or mechanical effect, subsequently to an action carried out by a user wearing the article of clothing.

The activating device comprises at least a sensor of movement or position capable to generate an activation electrical signal subsequently to a movement or a change of position of the said user and the effect generating device is electrically connected with the said sensor of movement or position and it is activated by the said activation electrical signal.

In this case, the article of clothing presents multiple sensorial elements all of them controlled by the user because they are activated depending on given movement of him/her. This way, the drawback existing in the moment of the embodiment of the said document is overcome, consisting in that the user had to press the switch in the article of clothing in order the said effects are activated.

In this case, although it can have other uses, the main functionality of the article of clothing is that of recreational uses, in which the user is submerged in a virtual reality and the article of clothing has to respond with different sensorial effects according to what the user is experimenting in the said virtual reality.

Therefore it presents no intent as well as no possibility of searching like-minded persons, and not of carrying out pairing between users according to common interests and in addition, in this case, it is the user who controls activating or not of the sensors or devices existing in the article of clothing , therefore it does not refer to the existence of signaling devices in articles of clothing that serve to warn the use.

In the document of reference ES2208031, an interactive system of human relations is defined that comprises radiofrequency personal communication devices that have available a own energy supply, a control unit, a keyboard in order that the user can select the options he/she wishes among those it offers in a preset manner, a menu, configuring that way two groups of options, I-am-searching options that define characteristics applied for and I-am options, that define offered characteristics, a radiofrequency emitter-receiver to perform the release of the options selected and the receipt of the options from nearby communication devices in order to be able to compare the options selected in both and a warning element capable to provide different warnings depending on the level of coincidence in the said comparison.

In addition, it presents at least a radiofrequency digital receiver to detect the passage of personal communications and capture the information detailed in the options that are released, to send them through communication means to a server that manage a database communicated with a web page in order to make possible the inquiry on the number of persons, bearing a communication device, who meet given search options.

This document, that in fact sets an objective very similar to that proposed in this invention, sets a pairing search based in data that are in located in the web and therefore, they require a constant consumption of data, that in addition to the drawback of the possible costs added , present the limitation of use of the system in locations that
does not possess a suitable connectivity. In addition, the two options that are set in this system, in which on the one hand there is the search option and on the other hand the I-am option, generate a very complicated search method.

Another drawback this system presents is the need of multiple elements to be able to carry out the connection. Thus, it requires a radiofrequency receiver related to an energy supply system and communication means that have to possess a battery, a screen, a keyboard, a central unit and a modem to be able to link with the server. This by itself results quite cumbersome if an user who pretends to achieve a link with another compatible person has to always bear it, but in addition, this system requires the installation of a series of digital receivers on the doors of premises and those receivers are the ones that are going to locate at the entrance or the exit of the premise of users with personal localizers and carrying out a necessary connection with a central server to assess the characteristics of each detectable user, determining whether there exists a compatibility or not.

Therefore, this system presents the drawback that it is fully restrained to the areas having connection to internet and controlled by those receivers, so that a meeting between compatible persons outside these controlled places, will not be detected by the radiofrequency receivers.

In this document of reference ES2305801, a method is defined to perform a follow-up of the proximity of at least a slave object to a master object associated to a person, in which at least a slave object comprises first and second slave objects. Between the master object and the slave objects wireless communication means exist that operate within a predetermined distance.

This document, therefore refers to a personal proximity network in the form of a wireless communication network between a master and the objects that act as its slaves. In this case, no intent of personal connection is envisaged between different individuals and the physical links between persons that were envisaged as objective of this invention, are replaced in this document by electronic links. Thus, in this document, for example, different small objects such as keys, wallets, laptops, purses... are labelled by means of an electronic beacon that communicates with the master.

It is therefore different from the objective of this invention, for searching like-minded persons, soulmates, with whom sharing tastes, hobbies, manners...

In this document of reference ES2366881, a device and a method are defined for coupling a computer to a RFID tag. This method sends a modulated second signal to the RFID tag by means of a computer wired to the RFID tag and in addition it receives a modulation in a first modulated signal from the RFID tag through a detector by means of the processor.

In this document, in addition, a device is disclosed that comprises a RFID tag with a memory, a set of communication circuits and the antenna terminals.

However, the objective to improve the interconnectivity between like-minded persons is not sought because only a communication system is described, between a tag and a reading-writing device, the existence of any signaling element connected to the label is not either stated.

Therefore , there does not exist in the state-of-the-art, a method that allows the search, location and pairing of like-minded persons in a manner fully discrete and randomly that offers the option of linking between two persons that coincide in the space and time, without it is required that the said space is a determined one or that it has to possess an essential internet coverage and that in addition can be performed without the user has to be pending on the said search in order it is achieved, thanks to the existence of some element that warns the user of the system of the existence of another user compatible to him/her and without that means using multiple and/or complicated electronic accessories requiring recharge of their means of constant supply or that result uncomfortable to bear.

### Description of the invention

The method for location and interaction between compatible persons, in which the said compatibility is determined depending on given features of affinity of the user, the said features being physical, psychic, of tastes, hobbies affinity and/or any other characteristic that is wished, by means of a pairing system, that comprises at least a transmitting/receiving element, formed by a mobile device , that presents a software layer and a computer application installed on it and a signaling element connected to the said transmitting/receiving element that is presented herein, that comprises a series of stages determining a continuation.

A first stage consists in introducing the features of affinity of a first user in the computer application of a first transmitting/receiving element that presents first and second short-length connection means where the said application acts when the connection to internet lacks and where the system comprises a transmitting/receiving element for each user thereof.

The second stage is setting a database, on the software layer of the first mobile device, in which the said database is structured in increasing stages of detail, from the features of affinity introduced by the first user.

Thus, the data of the user are only introduced in the database of the software of the mobile device, but as the application does not connect internet, these data remain in the software of the mobile device and are not accessible by the rest of the users.

Thereafter, a third stage is carried out of searching persons compatible with the first user performed by means of the software layer of the first mobile device by releasing first short-length signals through the first connecting means.

Thus, by means of the said short-length connecting means, a first device sends search signals to a second mobile device with which comparing the data of their respective databases.

The fourth stage consists in the pairing link of the software layer of the first mobile device, by the said first connecting means that present a first operating range, with the software layer of a second mobile device which search parameters of affinity features result compatible with those of the first mobile device and is located within the first signal operating range.

Thus, when a first mobile device finds a second device by sending and receiving signals from the first connecting means and after comparing their databases, they determine that there exists a sufficient compatibility, they generate the said pairing link between the first and the second device.

After the said pairing link between the first and the second device, a fifth stage occurs formed by the link of each of the said first and second paired mobile devices , with the signaling element connected to each of them, respectively , by means of releasing short-length second signals by the second connecting means with a second operating range, this being smaller than the first operating range , where each first and second signaling elements comprises at least a sensor adapted to release a warning signal when the link to at least the first and the second user, respectively, occurs.

Thus, this stage consists in that each of the two paired mobile devices send signals through the second short-length connecting means of each of them, up to the first and second signaling elements, respectively.

Last, a sixth stage consisting in activating the warning signal of at least a sensor, by the said first and second signaling elements.

Therefore, with the second connecting means, each mobile device activates the signaling element corresponding to the link with it and, when it activates it, the signaling element performs the activation of the sensor or sensors connected to it.

According to a preferred embodiment, the first connecting means are formed by the release of electromagnetic signals between a first mobile device and any other mobile device of users of the pairing system that is located within the first operating range of the said electromagnetic signals where the said first operating range is lower or equal to ten meters.

In a preferred embodiment, the second connecting means of the mobile device are formed by the release of short-length electromagnetic signals, the second operating range being smaller or equal to one meter and, the receipt thereof by the signaling element.

According to a preferred embodiment, the signaling element is formed by a device with low consumption electronic elements connected to the sensor or sensors thereof.

In this case and in a preferred embodiment, the at least one sensor of the signaling element is formed by a light sensor, a sound sensor and/or a vibration sensor.

Also, in this last case and according to a preferred embodiment, the warning signal of the signaling element is formed by a visual, acoustic and/or haptic signal.

According to a preferred embodiment, the search of compatible persons is carried out by psychologic parameters.

According to a preferred embodiment, the mobile device is formed by a smart mobile phone, a tablet or the like.

According to a preferred embodiment, the first connecting means are formed by a connection via Bluetooth.

According to a preferred embodiment, the second connecting means are formed by radio waves, a connection via Bluetooth or the like. In any of the cases, a technology of passive circuit or a technology of active circuit can be used.

With the method for location and interaction between compatible persons that is proposed herein a significant improvement of the state-of-the-art is achieved.

It is so because a method is obtained that allows the search, location and pairing of like-minded persons that are located at the same time and place and are compatible according to given features selected by themselves and this is achieved by means of a system in which each user presents his/her mobile device with the data within it and they are those devices that detect each other thanks to the technology of short-length connection that virtually all the devices currently presents.

Thus, as the devices are detected by electromagnetic waves, without the intervention of a connection via internet, or the intervention of any type of software or external element, the connection is faster, simpler and more effective. In addition, it does not generate additional data consumptions because the search and the link are carried out without connection to internet, therefore it can be done at any place, without limitations of whether there exists operating range or not.

A significant advantage is that the software of the system works locally, that means that it does not required to be connected to an external server that allows the geolocation.

It presents the additional advantage that there exists a signaling element that warns the user of the system on the existence of another user compatible to him/her and without that means using multiple and/or complicated electronic accessories that require recharging their constant energy supply means, or results uncomfortable to wear. They do not require either accessory elements such as receivers that detect the devices, only the said mobile devices and the signaling elements, therefore it results to be a cheap, very simple and easy to use method because the user only is due to introduce data.

In addition, it results a method that allows the location of compatible persons coinciding in a same space/time, fortuitously, that was not possible with the current systems and, in addition, it is discrete because the user introduces his/her data but is not going to know whose other users exist in the system, until he/she is in the same space/time with one of those users that results compatible with him/her. At that moment, thanks to the signaling element, the user will be able to detect whether the said second compatible user exists and decides whether contacting him/her or not.

The signaling element is a low consumption tag that is only activated when the transmitting/receiving element sent electromagnetic signals to it, therefore it does not present power consumption and it does not require to be recharged because the transmitter itself activates it. In addition, these electronic elements allow to be usually washed, therefore they can be imbedded in an article of clothing, for example, so that the user can wear it, feeling fully comfortable, without he/she or any other user is conscious that he/she wears it.

There exists the possibility that the sensor connected to a signaling element releases for example an optical signal, as could be a led being lighted, that warns as well the first user as the user compatible with him/her, of the existence of compatibility, informing at the moment on the identity of the said first user. And, at same time, there also exists the option that the connected sensor is more discrete, for example a haptic sensor that releases a vibration so that the first user is informed on the existence in a first operating range of another compatible user and whether the other one uses a led device, for example, the first user locates it and can decide whether contacting him/her or not.
On the other hand, the transmitting/receiving element is a mobile device that can be formed by a smart phone, a tablet or the like, that are devices that nowadays anybody possesses and in addition they wear it, therefore it is not necessary to acquire an additional transmitting/receiving element.

Therefore, a method for location and interaction between compatible persons much faster and more effective is obtained, easy to use and that does not require to acquire many elements, only the signaling element, that can be associated to articles of clothing in everyday life and, therefore, it results a method linked to a simple and cheap system.

### Short description of the drawings

In order to assist to best understanding the characteristics of the invention, according to a preferred practical embodiment thereof, as part of this description, a series of drawings is provided which, for illustrating and not limiting purpose, are represented as follows:
The Figure 1.- It shows a bar chart of the method for location and interaction between compatible persons in pairing, according to a preferred embodiment of the invention.
The Figure 2.- It shows a diagram of the existing elements and their connections, in a method for location and interaction between compatible persons according to a preferred embodiment of the invention.

### Detailed description of a preferred embodiment of the invention.

At the sight of the figures provided, it can be seen how in a preferred embodiment of the invention, the method for location and interaction between compatible persons, in which the compatibility is determined depending on given features of affinity of the user such as physical, psychic, of tastes, hobbies features and/or any other characteristic it is wished, by means of a pairing system that comprises at least a transmitting/receiving element, formed by a mobile device , that presents a software layer and a computer application installed in it and a signaling element connected to the said transmitting/receiving element that is proposed herein, comprises a series of stages that are presented below.

In this preferred embodiment of the invention, the signaling element is arranged in an article of clothing of public sale, so that the customer who purchases this article is given as a gift the free installation of the computer application of the system in his/her mobile device. This way, in addition, the article of clothing is provided with a given exclusivity by means of the possibility to locate like-minded persons associated to the purchase thereof.

The first stage of this method for location and interaction between compatible persons is necessarily introducing (1) the features of affinity of a first user, in the computer application (18) of a first transmitting/receiving element that presents first and second short-length connecting means (8, 9), where the said application (18) acts when connection to internet is lacking and where the system comprises a transmitting/receiving element for each user thereof.

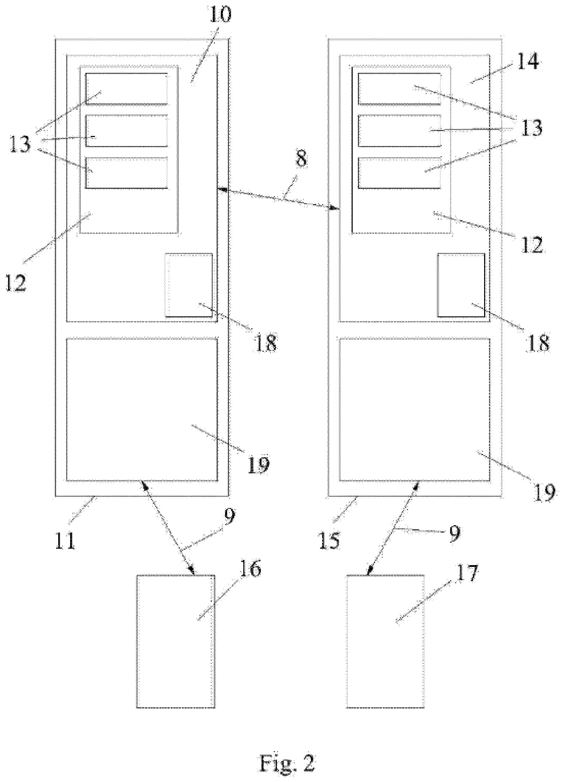

Thereafter, a second stage is performed consisting in setting (2) a database (12), by the software layer (10) of the first mobile device (11), where the said database (12) as it is shown in the Figure 2, is structured in increasing detail steps (13) from the features of affinity introduced by the first user.

This way, the first user fills in a card that, in this preferred embodiment of the invention, is comprised of two sections. The first section of fixed data (F), where the fields the change of which in the time is nihil or low are introduced. In this section, the data referring to the address, physical appearance, a current close-shot photograph and characteristics on the personality are introduced. On the other hand, a second section consists of other data (O), in which fields are introduced such as studies, occupation, hobbies, animal, culture, music liking, personal projects, dreams...

Both sections can be filled in by the user at his/her free will, even providing data he/she thinks important although they are not appearing in any of these sections.

The user may order the features of affinity introduced in hierarchies, according to his/her personal interests, even this order of the features of affinity can be changed when the situation requires it so.

Thus, in certain moments, the user can be interested in relating with persons having a taste like his/her. For example, before a match or a concert, he/she can be willing to relate to persons that are fans of the same team or of the same musical group. In these cases, the user determines that a given characteristic of his/her database has to be prevailing at that moment on the other ones and try to find persons like-minded to him/her. When this situation is over, he/she can come back to a deeper general search, in which more characteristics of his/her database intervene.

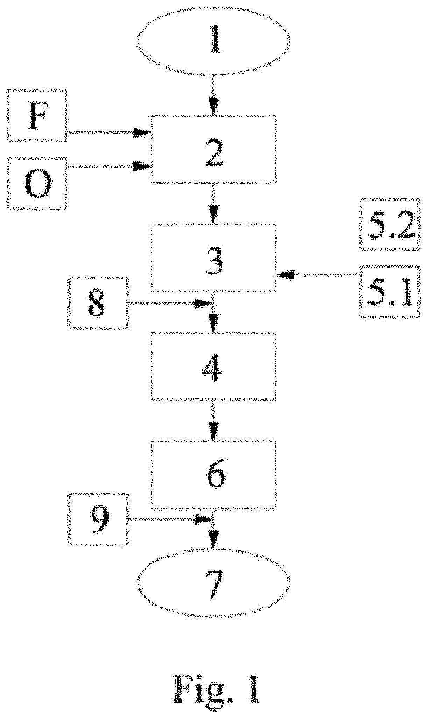

As shown in the Figure 1, the following is the stage of search (3) of persons compatible with the first user, carried out by means of the software layer (10) of the first mobile device (11), by releasing first short-length signals through the first connecting means (8).

In this preferred embodiment of the invention, the first connecting means (8) of the first mobile device (11) are formed by releasing electromagnetic signals between the said first mobile device and any other mobile device of users of the paring system that is located within the operating range of the said electromagnetic signals, being in this embodiment, preferably a first 10-metre operating range.

Thus, the first mobile device releases short-length electromagnetic signals so that if the device of another user of the system enters in the 10-metre operating range, it would detect it and both will communicate to determine whether there exists compatibility or not. The use of the said electromagnetic signals allows a much faster and more effective connection between mobile devices than in the event of having to use a software of the network as intermediary element, because this slows down the process and limits it to the existence of network connection. In addition, it allows the location of persons that are at a same moment and place in a simple manner and without excessive additional elements.

The system is by default in this stage, that means, searching pairing like-minded persons, depending on the parameters set by the user.

The following stage is that of pairing (4) link of the software layer (10) of the first mobile device (11) by the first connecting means (8) with the first operating range with the software layer (14) of a second mobile device (15) which search parameters of the affinity features result compatible with those of the first mobile device (11) and are located within the first operating range.

Thereafter, a stage of linking the said first and second paired mobile devices (11, 15) is carried out with the signaling element (16,17) connected to each of them, respectively, by means of the release of second short-length signals by the second connecting means (9), with a second operating range smaller than the first operating range, where each first and second signaling elements (16,17) comprises at least a sensor adapted to release a warning signal when the link to at least the first and second user , respectively, occurs.

Thus, if a compatibility exists, each mobile device is communicated with the related signaling element by means of the second connecting means (9) that activates the said signaling element.

These second connection means do not either need any connection to the network therefore the connection of this signaling element, that has to be in its operating range is fast and safe, because in this preferred embodiment of the invention, the second connecting means (9) of each mobile device are formed by releasing short-length electromagnetic signals, the second operating range being in this case equal to one meter and the receipt of them by the related signaling element. As it has short length with a so reduced second operating range, the connection of a device is secured only with the signaling element corresponding to it, without allowing errors of connection with other nearby elements.

And last, a stage of activation of the warning signal of at least one sensor, by the said first and second signaling elements (16, 17).

In this preferred embodiment of the invention, the search of compatible persons is carried out by psychologic parameters (5.1) although in other cases physical parameters (5.2) could also be considered in a combined manner with the psychological parameters or as a unique manner.

The mobile device is formed by a mobile smart phone in this preferred embodiment of the invention and the first connecting means (8) of the electromagnetic signals are formed by a connection via Bluetooth. These first connection means (8) form part of the hardware (19) of the mobile device (11) and are activated when there exists a coincidence between the database of the mobile device of the first user with the other mobile device of another user of the system.

The second connecting means (9), in this preferred embodiment of the invention are formed by radio waves that in this case uses passive circuit technology, the signaling element being formed by a device with low-consumption electronic elements and two sensors, one of light and one of vibration, connected to them.

Thus, in the stage of activation (7) of a warning signal by the first and the second signaling elements (16,17) linked with the first and the second mobile device (11, 15) respectively , the warning signaling that both signaling elements carry out is a visual signal (V) consisting in a led-type lighting element , combined with a haptic signal (H) consisting in a vibration.

The function of the signaling element is that of signaling to the user when an event contemplated in the system occurs, such as the location of a person having interests that meet the criterion set in a nearby radio. The objective is the mutual location of both candidates to get them in contact.

For this, by means of the visual and haptic signal in this case, as well the user who generates the warning, as well as the opposite user, who receives the invitation, are warned. In order that the said interaction actually occurs, the signal, in this case, has to be visible and it has to be felt.

In this preferred embodiment of the invention, the signaling element is embedded in certain articles of clothing. These devices with electronic elements allow their usual washing, or at least, the possibility to withdraw the sensitive part before submitting the clothing to a cycle with water.

Generally, this electronic element is a passive circuit that only reacts to the impulse generated by the mobile device when there is a coincidence. In the case of a passive circuit, all the energy the chip can collect, it reverts it in the optical signal by means of the surface and low-consumption LED. In the case of an active circuit, the impulse generated by the mobile device activates the sensors by means of the energy of an embedded battery.

The embodiment disclosed constitutes only an example of this invention, therefore, the specific details, terms and sentences used in this invention are not to be considered as limitative but that they have to be understood only as a basis for the claims and as a representative basis that provides an understandable description as well as the information sufficient for the person skilled in the art to apply this invention.

With the method for location and interaction between compatible persons presented herein, significant improvements are achieved with respect to the state-of-the-art.

A method is achieved for pairing with which the persons using this system can find persons more mind-liked to them depending on the feature or combination of features that they wish. In addition, it is possible to set a hierarchy in the features of search and even change the preferences when the user needs it.

A very significant advantage of this method is that the software is installed in the mobile device of the user, that is going to work without requiring the existence of a connection to the network in order to be able to analyze in a permanent manner the existence or not of compatible persons, which prevents the need to depend on a connection to internet. Likewise, the fact that the method uses mobile devices that can be a mobile phone, a tablet or the like results very advantageous because normally any user of this method is going to have one of them available, therefore he has not to spend money on it.

Thanks to the connection between mobile devices, that mutually detect each other when they enter in the operating range of the other, without the need of intermediary elements, fastness and simplicity are provided to the process, in addition to allow the possible connection of persons coinciding in a same space/time, without having to use a central software that obliges the users to a permanent connection or to the use of accessory elements as receivers of the signals of these devices that detect them and inform the software, because with it the system becomes complicated, more expensive and in addition, the options of location are limited to the areas in which the said receivers exist.

Another essential element that intervenes in this invention is the signaling element that is embedded in the article of clothing and that is purchased together with it, therefore it results a comfortable, simple and practical method to be used, in addition to be very effective and cheap.

This signaling element consists of a low-consumption electronic element that is activated by the mobile device itself and up to that moment it is inactive. This element achieves that a person, when he/she becomes an user of the system, entering his/her data and preferences , will be able to go on having a normal life , fully discrete to this respect, because nobody will have access to his/her data, as there exist only in the database of his/her mobile device, without worrying to have to go searching compatible persons because he/she knows that, at the moment when he/she coincides in a same space and time with a person compatible with him/her, the said signaling element will warn it to him/her.

## Claims

1. Method for location and interaction between compatible persons where the said compatibility is determined depending on given features of affinity of the user, the said features of affinity being physical, psychic, of tastes, hobbies and/or any other characteristic it is wished, by means of a pairing system that comprises at least a transmitting/receiving element, formed by a mobile device , that presents a software layer and a computer application (18) installed in it and a signaling element connected to the said transmitting/receiving element, **characterized in that** it comprises the following stages:
- introduction (1) of the features of affinity of a first user, in the computer application (18) of a first transmitting/receiving element, that presents first and second short-length connecting means (8, 9) where the said application (18) acts when the connection to internet is lacking and where the system comprises a transmitting/receiving element for each user thereof;
- creating (2) a database (12), by the software layer (10) of the first mobile device (11) where the said database (12) is structured in details increasing steps (13) from the features of affinity introduced by the first user;
- search (3) of persons compatible with the first user carried out by means of the software layer (10) of the first mobile device (11) by means of the release of short-length first signals by the first connecting means (8);
- pairing link (4) of the software layer (10) of the first mobile device (11) by means of the said first connecting means (8) that present a first operating range, with the software layer (14) of a second mobile device (15) which parameters of search of the features of affinity result compatible with those of the first mobile device (11) and are located within the first operating range ;
- link (6) of the said paired first and second mobile devices (11, 15) with the signaling element (16, 17) connected respectively to each of them, by means of the release of second short-length signals by the second connecting means (9), with a second operating range this being smaller than the first operating range , where each first and second signaling element (16, 17) comprises at least a sensor adapted to release a warning signal when the link is achieved at least to the first and second user, respectively, and;
- activation (7) of the warning signal of at least one sensor, by the said first and second signaling elements (16,17).

2. Method for location and interaction between compatible persons, according to the clam 1, **characterized in that** the first connecting means (8) are formed by the release of electromagnetic signals between a first mobile device (11) and any other mobile device of users of the pairing system that is located within the first operating range of the said electromagnetic signals , where this first operating range is smaller or equal to ten meters.

3. Method for location and interaction between compatible persons, according to any of the preceding claims, **characterized in that** the second connecting means (9) of the mobile device are formed by the release of short-length electromagnetic signals, the second operating range being smaller or equal to one meter and their receipt by the signaling element.

4. Method for location and interaction between compatible persons, according to any of the preceding claims, **characterized in that** the signaling element is formed by a device having low-consumption electronic elements connected to its sensor or sensors.

5. Method for location and interaction between compatible persons, according to the clam 4, **characterized in that** the at least one sensor of the signaling element is formed by a light sensor, a sound sensor and/or a vibration sensor.

6. Method for location and interaction between compatible persons, according to the clam 5, **characterized in that** the warning signal of the signaling element is formed by a visual (V), acoustic (A) and/or haptic (H) signal.

7. Method for location and interaction between compatible persons, according to any of the preceding claims, **characterized in that** the search (3) of compatible persons is carried out by psychological parameters (5.1).

8. Method for location and interaction between compatible persons, according to any of the preceding claims, **characterized in that** the mobile device is formed by a smart mobile phone, a tablet or the like.

9. Method for location and interaction between compatible persons, according to any of the preceding claims, **characterized in that** the first connecting means (8) are formed by a connection via Bluetooth.

10. Method for location and interaction between compatible persons, according to any of the preceding claims, **characterized in that** the second connecting means (9) are formed by radio waves, a connection via Bluetooth or the like.
